# EUROPEAN PATENT APPLICATION

(11) **EP 4 130 808 A1**
(43) Date of publication of application: **08.02.2023**
(21) Application number: 21778782.9
(22) Date of filing: 17.03.2021
(51) Int. Cl.: G02B 1/118

(54) **OPTICAL BODY, METHOD OF PRODUCING OPTICAL BODY, AND OPTICAL DEVICE**

(30) Priority: 31.03.2020 JP 2020064433
(71) Applicant: Dexerials Corporation, Shimotsuke-shi, Tochigi 323-0194 (JP)
(72) Inventor: TAZAWA, Hiroshi, Shimotsuke-shi, Tochigi 323-0194 (JP)
(74) Representative: Scott, Stephen John
(86) International application number: PCT/JP2021/010930
(87) International publication number: WO 2021/200175

(57) **Abstract**

It would be helpful to provide an optical body having excellent antireflection performance over a wide wavelength range from the visible light region to the near-infrared region. The present disclosure discloses an optical body 1 including a transparent substrate 10 and a fine uneven layer 20 with a fine uneven structure in at least one surface of the substrate 10. A maximum value (Ra) of reflectance for light in a wavelength region of 400 nm to 950 nm is 1 % or less, and a wavelength at which the reflectance is at a local minimum value (Rb) is 650 nm or more.

## Description

### TECHNICAL FIELD

The present disclosure relates to an optical body having excellent antireflection performance over a wide wavelength range from the visible light region to the near-infrared region, a method for manufacturing an optical body having excellent antireflection performance over a wide wavelength range from the visible light region to the near-infrared region at low cost without any complicated steps, and an optical device having excellent visibility over a wide wavelength range from the visible light region to the near-infrared region.

### BACKGROUND

In recent years, sensor technology for image sensors, infrared sensors, and the like has been widely used in the fields of smartphones, automobiles, surveillance equipment, and the like. For example, conventional image sensors generally receive only light in the RGB (red, green, and blue) wavelength region (light in the visible light region), but in order to obtain higher sensing performance, there is a growing demand for technology for receiving light in the near-infrared region as well as light in the visible light region. However, it is known that silicon photodetectors used in image sensors are less sensitive to light in the near-infrared wavelength region than to light in the visible light region, and various types of technology have been developed for sensor chips, peripheral optical systems, and the like in order to enhance sensing performance.

Generally, in the peripheral optical systems, technology for forming antireflection multilayer films, which are designed to prevent reflection in the visible light region, on lenses and cover glass is known. When these antireflection multilayer films are designed to cover not only the visible light region but also the near-infrared region, an antireflection property deteriorates, as compared to antireflection films designed only for the visible light region. In other words, for the antireflection multilayer films, there is a trade-off between the width of a wavelength range and antireflection performance.

In addition, the number of layers and total film thickness required to expand an antireflection wavelength range increase, there are concerns about cost increases due to increased vacuum deposition time and lack of reliability such as peeling due to increased film stress.

As antireflection technology other than the multilayer film method described above, it is known to form a fine uneven shape (moth-eye structure) on a surface of cover glass.

For example, Patent Literature (PTL) 1 discloses technology for providing cover glass with a fine uneven structure formed by etching or the like in an electronic device module and electronic equipment.

### CITATION LIST

### Patent Literature

PTL 1: JP 2010-153512 A

### SUMMARY

### (Technical Problem)

However, conventional antireflection technology with a fine uneven structure, such as the cover glass described in PTL 1, cannot achieve sufficient antireflection performance against light with wavelengths in the near-infrared region.

In the technology described in PTL 1, the fine uneven structure is formed by directly etching or other processing a glass plate (substrate), which expenses much time and effort and requires high cost during manufacturing. This hinders mass production.

It would be helpful to provide an optical body having excellent antireflection performance over a wide wavelength range from the visible light region to the near-infrared region, a method for manufacturing an optical body having excellent antireflection performance over a wide wavelength range from the visible light region to the near-infrared region at low cost without any complicated steps, and an optical device having excellent optical properties over a wide wavelength range from the visible light region to the near-infrared region.

### (Solution to Problem)

The inventors have conducted intensive research to solve the above problems for an optical body including a transparent substrate and a fine uneven layer, formed on at least one surface of the substrate, with a fine uneven structure on its surface. As a result, the inventors have found that excellent antireflective performance can be achieved over a wide wavelength range from the visible light region to the near-infrared region, which could not be achieved with conventional antireflective structures such as moth-eye structure, by controlling reflectance for light in a wavelength region of 400 nm to 950 nm to have a lower maximum value (Ra) and to have a local minimum value (Rb) at a wavelength in a long wavelength region, and completed the present disclosure.

The present invention is made based on the above findings, the gist of which is as follows:
(1) An optical body including:
   a transparent substrate; and
   a fine uneven layer with a fine uneven structure in at least one surface of the substrate,
   wherein a maximum value (Ra) of reflectance for light in a wavelength region of 400 nm to 950 nm is 1 % or less, and a wavelength at which the reflectance is at a local minimum value (Rb) is 650 nm or more.
(2) The optical body according to (1), wherein a sum of a maximum value (RH (λ)) of regular reflectance of a surface (higher reflective surface) with higher reflectance of a front or rear surface of the optical body for light in a wavelength region of 400 nm to 950 nm and a maximum value (Tr (λ)) of transmittance of the optical body for light in a wavelength region of 400 nm to 950 nm is 97 % or more (RH (λ) + Tr (λ) ≥ 97 %).
(3) The optical body according to (1) or (2), wherein an average uneven height of the fine uneven structure is 180 nm or more.
(4) The optical body according to any one of (1) to (3), wherein a rate of change in an uneven height of the fine uneven structure of the fine uneven layer after being subjected to reflow processing is 20 % or less.
(5) A method for manufacturing the optical body according to any one of (1) to (4), including:
   forming a fine uneven structure in a curable resin applied to a substrate, using a mold having a fine uneven shape; and
   peeling the mold from a fine uneven layer made of the cured curable resin,
   wherein a modulus of elasticity of the mold is equal to or less than a modulus of elasticity of the substrate.
(6) The method for manufacturing the optical body according to (5), wherein after the mold is peeled from the fine uneven layer made of the cured curable resin, a laminate including the fine uneven layer and the substrate is subjected to electron beam processing and/or heat processing.
(7) An optical device including the optical body according to any one of (1) to (4).
(8) The optical device according to (7), being an imaging device or an imaging module, or a sensor or a sensor module.

### (Advantageous Effect)

According to the present disclosure, it is possible to provide the optical body having excellent antireflection performance over a wide wavelength range from the visible light region to the near-infrared region, the method for manufacturing an optical body having excellent antireflection performance over a wide wavelength range from the visible light region to the near-infrared region at low cost without any complicated steps, and the optical device having excellent optical properties over a wide wavelength range from the visible light region to the near-infrared region.

### BRIEF DESCRIPTION OF THE DRAWINGS

In the accompanying drawings:
FIG. 1 is a cross sectional view schematically illustrating an embodiment of an optical body according to the present disclosure;
FIG. 2 is a cross sectional view schematically illustrating another embodiment of the optical body according to the present disclosure;
FIG. 3 is a cross sectional view schematically illustrating further another embodiment of the optical body according to the present disclosure;
FIG. 4 is a flow diagram illustrating an example of a method for manufacturing the optical body according to the present disclosure;
FIG. 5 is a flow diagram illustrating an example of steps for manufacturing a mold of a fine uneven shape;
FIG. 6 is a graph of reflectance of an optical body according to an example 1, relative to wavelength;
FIG. 7 is a graph of reflectance of an optical body according to a comparative example 2, relative to wavelength; and
FIG. 8 is a graph of reflectance of an optical body according to a comparative example 4, relative to wavelength.

### DETAILED DESCRIPTION

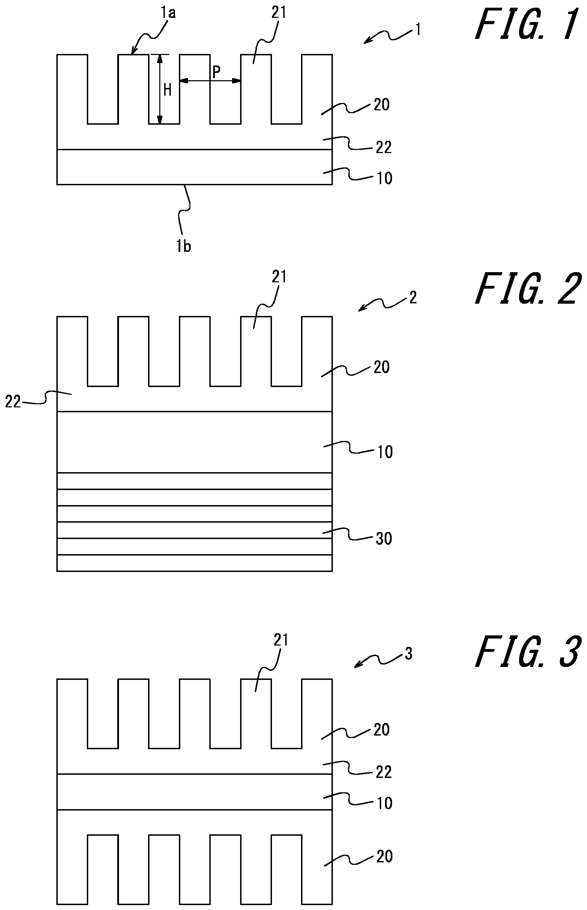

An example of an embodiment of the present disclosure will be described below using drawings as necessary. For convenience of explanation, each component disclosed in FIGS. 1-5 is schematically illustrated in a different scale and shape from the actual one.

### <Optical Body>

First, one embodiment of the optical body according to the present disclosure will be described. FIG. 1 is a cross sectional view schematically illustrating the embodiment of the optical body according to the present disclosure.

As illustrated in FIG. 1, an optical body 1 according to the present disclosure includes a transparent substrate 10 and a fine uneven layer 20, formed on at least one surface of the substrate 10, with a fine uneven structure (so-called "moth-eye structure") in its surface.

The optical body 1 according to the present disclosure is characterized in that a maximum value (Ra) of reflectance for light in a wavelength region of 400 nm to 950 nm is 1 % or less, and a wavelength of light at which the reflectance is at a local minimum value (Rb) is 650 nm or more.

By lowering the maximum value (Ra) of reflectance to 1 % or less at the time of applying the light in the wavelength region of 400 nm to 950 nm to the surface of the optical body 1, when the optical body 1 is used as a sensor, the reflection can be prevented not only in the visible light range used for normal imaging but also in the near-infrared range used for sensing such as position and spatial recognition. This enables to prevent the occurrence of ghosts and flares and thereby to improve light-receiving efficiency.

From the same perspective, the maximum value (Ra) of reflectance (Ra) is preferably 0.8 % or less, and more preferably 0.6 % or less.

The reflectance for light incident on the optical body 1 can be measured with a commercially available spectrophotometer (for example, V-770 manufactured by JASCO).

Furthermore, the optical body 1 can be designed so that the reflectance in the region from red to near-infrared can be lowered by setting the wavelength at which the reflectance is at a local minimum value to the red wavelength range or more (650 nm or more), in the relationship between the wavelength range of light and reflectance (graph with wavelength on the horizontal axis and reflectance on the vertical axis). Therefore, the optical body 1 of the present disclosure can achieve excellent antireflection performance in a wide wavelength range from 400 nm to 950 nm.

In the optical body 1 according to the present disclosure, the fine uneven layer 20 is formed on the at least one surface of the substrate 10, and the other surface can be designed as appropriate according to the application and required characteristics. For example, the other surface may have a fine uneven layer 20 in the same manner as on the one side. Alternatively, the other surface can be formed with a multilayer film such as an antireflection filter, band-cut filter, or band-pass filter, or can be unprocessed. Furthermore, the other surface can be coated with a resin layer with some function, or can be formed with a film with a microstructure that has a function different from that of the fine uneven structure described above. The resin layer with some function includes hard coatings and layers that absorb or reflect specific wavelengths by containing fillers, pigments, or the like, but is not limited to these. The film with the microstructure includes, for example, wire grid polarizing elements, diffractive optical elements, micro-lens arrays, and the like, but is not limited to these.

Furthermore, in the optical body 1 according to the present disclosure, from the viewpoint of achieving excellent antireflection performance on the one surface and high transmittance or reflectance on the other surface, the sum of regular reflectance (RH (λ)) of a surface (higher reflective surface) with higher reflectance of a front surface 1a or a rear surface 1b and transmittance (Tr (λ)) of the optical body 1 for light in the wavelength region of 400 nm to 950 nm is preferably 97 % or more (RH (λ) + Tr (λ) ≥ 97 %).

Here, as for the front surface 1a and the rear surface 1b of the optical body 1, either of surfaces can be the front surface or the rear surface. In FIG. 1, a front surface of the fine uneven layer 20 corresponds to the front surface 1a of the optical body 1, and a surface of the substrate 10 on a side in which the fine uneven layer 20 is not formed corresponds to the rear surface 1b of the optical body 1.

Of the front surface 1a and the rear surface 1b of the optical body 1, for the higher reflective surface (the front surface 1b of the optical body 1 in FIG. 1) with higher reflectance, by setting the sum (RH (λ) + Tr (λ)) of a maximum value (RH (λ)) of regular reflectance for light in the wavelength region of 400 nm to 950 nm and a maximum value (Tr (λ)) of transmittance of light in the wavelength region of 400 nm to 950 nm applied from the higher reflective surface to 97 % or more, excellent antireflection property and transmittance characteristics can be obtained.

For a comparison of reflectance between the front surface 1a and the rear surface 1b of the optical body 1 to determine the higher reflective surface, a surface with a higher maximum value of regular reflectance is determined as the higher reflective surface.

For the reflectance of the front or rear surface of the optical body 1, the regular reflectance at 5° at wavelengths from 250 nm to 1600 nm is measured using a commercially available spectrophotometer (for example, V-770 manufactured by JASCO).

For Tr (λ) of the optical body 1, the transmittance at an incident angle of 0° can also be measured at wavelengths from 250 nm to 1600 nm using a commercially available spectrophotometer (for example, V-770 manufactured by JASCO).

Here, a method for adjusting the value of reflectance of the optical body 1 is not particularly limited, and can be set as appropriate to a desired range by controlling manufacturing conditions by known methods. For example, as described below, by controlling the height H of recesses and protrusions of the fine uneven layer 20, the values of R1, R2, and Rb of the optical body 1 can be adjusted so as to satisfy the above relationship.

Components of the embodiment of the optical body according to the present disclosure will be described below.

### (Substrate)

The optical body 1 according to the present disclosure includes the substrate 10, as illustrated in FIG. 1.

Here, the substrate 10 is a transparent substrate. Using the transparent substrate has no adverse effect on light transmission and the like.

In this specification, "transparent" means that the transmittance of light at wavelengths belonging to a use band (the visible and near-infrared light bands) is high, for example, the transmittance of the light is 70 % or more.

A material of the substrate 10 includes, for example, various types of glass, quartz, crystal, sapphire, polymethyl methacrylate (PMMA), cyclo-olefin polymer, cyclo-olefin copolymer, and the like, but is not particularly limited and can be selected as appropriate according to performance and the like required of the optical body 1.

The surface shape of the substrate 10 is not particularly limited except for being platy, as illustrated in FIGS. 1 and 2, and can be selected as appropriate according to performance and the like required of the optical body 1. For example, the substrate 10 can be in a lens-like curved surface shape or the like.

Furthermore, the thickness of the substrate 10 is not particularly limited, and can be in the range of 0.1 to 2.0 mm, for example.

### (Fine Uneven Layer)

As illustrated in FIG. 1, the optical body 1 according to the present disclosure further includes the fine uneven layer 20, formed on at least one surface of the substrate 10, with the fine uneven structure in its surface.

The fine uneven layer 20 can then prevent the occurrence of reflected light and enhance the antireflection performance of the optical body 1 according to the present disclosure.

The arrangement of the fine uneven structure of the fine uneven layer 20 is not particularly limited. For example, as illustrated in FIG. 1, the recesses and protrusions can be arranged in a hexagonal or square lattice or can be arranged randomly.

Furthermore, the shape of protrusions 21 is not particularly limited as long as the shape provides desired optical characteristics, and may be bullet-shape, pyramidal, columnar, needle-shape, or the like. The shape of the recesses means a shape formed by inner walls of the protrusions 21.

Here, the average uneven height (the depth of the recesses) H of the fine recesses and protrusions is an important condition in terms of obtaining excellent antireflection performance over a wide wavelength range. Specifically, the average uneven height H of the fine recesses and protrusions is preferably 180 nm or more. This is because excellent antireflection performance can be achieved more reliably over a wide wavelength range from the visible light region to near-infrared region. From the same viewpoint, the average uneven height H of the fine recesses and protrusions is more preferably 190 nm or more, and even more preferably 200 nm or more.

The average uneven height H of the fine uneven structure is preferably 300 nm or less from the viewpoint of release from the mold.

The uneven height H of the fine uneven structure is a distance from the bottom of a recess to the top of a protrusion 21, as illustrated in FIG. 1. The average uneven height can be obtained by measuring the uneven height H at several (for example, five) locations and calculating an average.

The thickness of a support portion 22 under the fine uneven structure of the fine uneven layer 20, in which the fine uneven structure is not formed , is not particularly limited. However, when a resin and a base material have different linear expansion coefficients, there is concern that if the support portion 22 is too thick, problems may occur in adhesion and the like in terms of long-term reliability, so the thickness of the support portion 22 should be of the order of 10 to 9000 nm.

Each fine uneven structure formed on both sides of the fine uneven layer 20 preferably has an uneven period (uneven pitch) P that is equal to or less than a wavelength of visible light. The uneven pitch P is preferably 400 nm or less, and more preferably 250 nm or less. When the microstructure arrangement is aligned, if the uneven pitch is large, there is a concern that reflected diffracted light caused by the microstructure arrangement may be generated depending on the angle of incident light and affect image quality.

The uneven period P of the fine uneven structure is an arithmetic mean of distances between adjacent protrusions and between adjacent recesses. The uneven period P of the fine uneven structure can be obtained by cross sectional observation using, for example, scanning electron microscopy (SEM), transmission electron microscopy (TEM), or the like.

A method for deriving the arithmetic mean of the distances between the adjacent protrusions and between the adjacent recesses includes a method in which, for example, multiple combinations of the adjacent protrusions and/or the adjacent recesses are picked up, the distances between the protrusions and the recesses constituting each combination are measured, and the measured values are averaged.

The period P of the fine uneven structure formed in the fine uneven layer 20 can be the same period P, as illustrated in FIG. 1, or can vary. However, even when the period P of the fine uneven structure is different from surface to surface, it is preferable that the uneven period be equal to or less than a wavelength of visible light.

Furthermore, for the fine uneven layer 20, it is preferable that a rate of change in the uneven height H of the fine uneven structure, after being subjected to reflow processing, is applied is 20 % or less. Although it is conceivable that the fine uneven layer 20 may shrink by heat processing such as the reflow processing depending on its material, a desired antireflection property may not be obtained when the uneven height H becomes too low, compared to an initial value, due to the processing. Therefore, it is preferable for the fine uneven structure to ensure durability to maintain the desired antireflection property even after the reflow processing. In order to maintain the desired antireflection property, the rate of change in the uneven height H of the fine uneven layer 20 is preferably 20 % or less, more preferably 15 % or less, and especially preferably 10 % or less.

The rate of change in the uneven height H of the fine uneven structure is calculated by measuring the average uneven height H of the fine uneven structure before and after the reflow processing, and then calculating the percentage (%) of change in height.

The reflow processing is processing of surface mounting of a device to board joints, and generally refers to a heat processing step of printed solder paste or a ball grid array (BGA), usually at the highest attainable set temperature (around 180 °C to 270 °C) of the processing.

Here, the material of the fine uneven layer 20 is not particularly limited. For example, from the viewpoint of moldability of the fine uneven layer 20, a resin composition that cures by a curing reaction, such as an active energy ray curable resin composition (photo-curable resin composition, electron beam curable resin composition) or thermosetting resin composition, and contains, for example, a polymerizable compound and a polymerization initiator can be used.

As the polymerizable compound, for example, (i) an ester compound obtained by reacting one mole of polyhydric alcohol with two or more moles of (meth)acrylic acid or its derivative, (ii) an ester compound obtained from polyhydric alcohol, polyvalent carboxylic acid or its anhydride, and (meth)acrylic acid or its derivative, or the like can be used.

The above (i) includes 1,4-butanediol di(meth)acrylate, 1,6-hexanediol di(meth)acrylate, 1,9-nonanediol di(meth)acrylate, trimethylolpropane tri(meth)acrylate, trimethylolethane tri(meth)acrylate, pentaerythritol tri(meth)acrylate, pentaerythritol tetra(meth)acrylate, tetrahydrofurfuryl acrylate, glycerol tri(meth)acrylate, dipentaerythritol penta(meth)acrylate, dipentaerythritol hexa(meth)acrylate, tripentaerythritol hexa(meth)acrylate, tripentaerythritol hepta(meth)acrylate, acryloymonophorine, urethane acrylate, and the like.

The above (ii) includes ester compounds obtained by reacting a polyhydric alcohol such as trimethylol ethane, trimethylol propane, glycerin, or pentaerythritol, a polyvalent carboxylic acid selected from malonic acid, succinic acid, adipic acid, glutaric acid, sebacic acid, fumaric acid, itaconic acid, maleic anhydride, and the like or its anhydride, and (meth)acrylic acid or its derivative, and the like.

One of these polymerizable compounds may be used alone or in combination with two or more.

Furthermore, when the resin composition is photo-curable, the photopolymerization initiator can be, for example, a carbonyl compound such as benzoin, benzoin methyl ether, benzoin ethyl ether, benzoin isopropyl ether, benzoin isobutyl ether, benzyl, benzophenone, p-methoxybenzophenone, 2,2-diethoxyacetophenone, α,α-dimethoxy-α-phenylacetophenone, methylphenylglyoxylate, ethylphenylglyoxylate, 4,4'-bis(dimethylamino)benzophenone, 1-hydroxy-cyclohexyl-phenyl-ketone, or 2-hydroxy-2-methyl-1-phenylpropan-1-one; a sulfur compound such as tetramethylthiuram monosulfide or tetramethylthiuram disulfide; 2,4,6-trimethylbenzoyl-diphenyl-phosphine oxide, benzoyl diethoxyphosphine oxide; or the like. One or more types of these can be used.

In the case of being electron beam curable, an electron beam polymerization initiator can be, for example, thioxanthone such as benzophenone, 4,4-bis(diethylamino)benzophenone, 2,4,6-trimethylbenzophenone, methyl orthobenzoylbenzoate, 4-phenylbenzophenone, t-butylanthraquinone, 2-ethylanthraquinone, 2,4-diethylthioxanthone, isopropylthioxanthone, or 2,4-dichlorothioxanthone; acetophenone such as diethoxyacetophenone, 2-hydroxy-2-methyl-1-phenylpropan-1-one, benzyl dimethyl ketal, 1-hydroxycyclohexyl-phenyl ketone, 2-methyl-2-morpholino(4-thiomethylphenyl)propan-1 -one, or 2-benzyl-2-dimethylamino-1-(4-morpholinophenyl)-butanone; benzoin ether such as benzoin methyl ether, benzoin ethyl ether, benzoin isopropyl ether, or benzoin isobutyl ether; acylphosphine oxide such as 2,4,6-trimethylbenzoyl diphenylphosphine oxide, bis(2,6-dimethoxybenzoyl)-2,4,4-trimethylpentylphosphine oxide, or bis(2,4,6-trimethylbenzoyl)-phenylphosphine oxide; methylbenzoylformate, 1,7-bisacridinylheptane, 9-phenylacridine, or the like. One or more types of these can be used.

In the case of thermosetting, a thermal polymerization initiator includes, for example, organic peroxides such as methyl ethyl ketone peroxide, benzoyl peroxide, dicumyl peroxide, t-butyl hydroperoxide, cumene hydroperoxide, t-butyl peroxyoctoate, t-butyl peroxybenzoate, lauroyl peroxide; azo compounds such as azobisisobutyronitrile; redox polymerization initiators combining the organic peroxides with amines such as N,N-dimethylaniline, N,N-dimethyl-p-toluidine, and the like.

These photopolymerization initiator, electron beam polymerization initiator, and thermal polymerization initiator may be used alone or in combination as desired.

The amount of polymerization initiator is preferably 0.01 to 10 parts by mass for 100 parts by mass of polymerizable compound. In such a range, curing progresses sufficiently, the molecular weight of a cured material becomes appropriate and sufficient strength is obtained, and problems such as coloration of the cured material due to residues of the polymerization initiator do not occur.

In addition, the resin composition can contain a non-reactive polymer and an active energy ray sol-gel reactive component as needed, and can also contain various additives such as a thickener, leveling agent, UV absorber, light stabilizer, heat stabilizer, solvent, and inorganic filler.

As illustrated in FIG. 1, the optical body 1 of the present disclosure has the fine uneven layer 20 with the fine uneven structure formed on one surface of the substrate 10, but can have a layer with an antireflection function on the other side.

Here, FIGS. 2 and 3 illustrate examples of the optical body 1 according to the present disclosure with a layer with an antireflection function on the other surface as described above.

As illustrated in FIG. 2, in the optical body 1 according to the present disclosure, the fine uneven layer 20 having the fine uneven structure is provided on one surface of the substrate 10, and according to the purpose of use, a multilayer antireflection film (multilayer AR) 30 can be formed on the other surface of the substrate 10. For example, since the fine uneven layer 20 has concerns about abrasion resistance and contamination resistance, it is generally difficult to use the fine uneven layer 20 in places where the surface is exposed and may be contaminated, and a highly durable coating such as the multilayer antireflection film can be applied to an exposed side.

The optical body 1 according to the present disclosure, in the embodiment illustrated in FIG. 2, can achieve excellent antireflection performance even for light from a side on which the fine uneven layer 20 is not provided.

As illustrated in FIG. 3, the optical body 1 can be provided with the fine uneven layers 20 with the fine uneven structure on both surfaces of the substrate 10. In this case, the optical body 1 according to the present disclosure can achieve excellent antireflection performance even for light from a side on which the fine uneven layer 20 has not been provided. When the fine uneven layers 20 are provided on both surfaces of the substrate 10, the used fine uneven layers 20 may be the same or different. In a case in which required performance is different, e.g., antireflection performance over a wide range of wavelengths from the visible light region to the near infrared region is required of one surface of the optical body 1 according to the present disclosure, while reflection of only light in the visible light region is required of the other surface, the fine uneven layers 20 that are different from each other can be provided on the substrate 10.

### (Other Layers)

The optical body 1 can also include an easy-adhesion layer and other layers, in addition to the substrate 10 and the fine uneven layer 20 described above, if necessary.

For example, the easy-adhesion layer (not illustrated) can be provided between the substrate 10 and the fine uneven layer 20 for the purpose of enhancing adhesion.

A material of the easy-adhesion layer is not particularly limited, and an optimal material can be selected as appropriate depending on a combination of the resins used for the substrate 10 and the fine uneven layer 20. For example, the material includes coating agents containing common silane coupling agents, UV-curable resins, thermosetting resins, solvents, and the like.

When there is a difference in refractive index between the materials (resins) used in the substrate 10 and the fine uneven layer 20, one or more refractive index adjustment layers can be laminated to reduce interfacial reflection. As materials for the refractive index adjustment layers, there are layers made of metal oxides, and coatings containing general silane coupling agents, UV curable resins, thermosetting resins, solvents, and the like.

### <Method for Manufacturing Optical Body>

Next, a method for manufacturing the optical body 1 will be described.

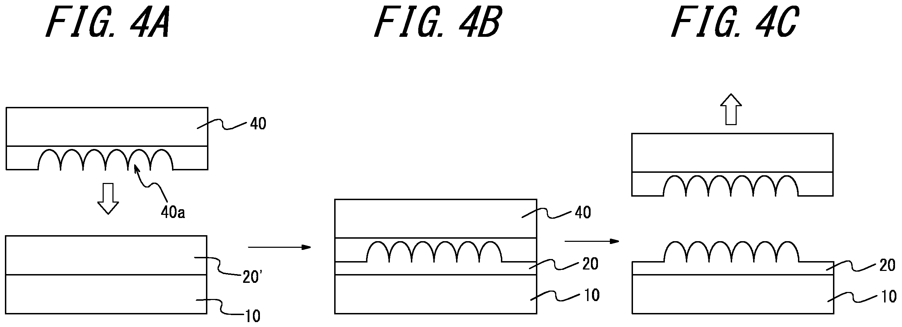

As illustrated in FIG. 4, the method for manufacturing the optical body 1 according to the present disclosure includes the steps of:
forming the fine uneven structure in a curable resin 20' applied to the substrate 10, using a mold 40 having a fine uneven shape 40a ((a) and (b) of FIG. 4); and
peeling the mold 40 from a laminate with the fine uneven layer 20 made of the cured curable resin ((c) of FIG. 4).

By being subjected to the above steps ((a) to (c) of FIG. 4), the optical body 1 according to the present disclosure can be manufactured at low cost without complicated steps.

In the manufacturing method of the optical body 1 according to the present disclosure, the step of forming the fine uneven structure ((a) and (b) of FIG. 4) specifically includes the step of applying the curable resin 20' on the substrate 10 ((a) of FIG. 4) and the step of curing the curable resin with the mold 40 having the fine uneven shape 40a adhering to the curable resin ((b) of FIG. 4).

As illustrated in (a) of FIG. 4, the mold 40 has the fine uneven shape 40a. With the mold 40 having the fine uneven shape 40a, the fine uneven structure can be transferred to the fine uneven layer 20 without any complicated steps.

The manufacturing method according to the present disclosure is characterized in that the modulus of elasticity of the mold 40 is lower than the modulus of elasticity of the substrate 10. Since the modulus of elasticity of the mold 40, when the curable resin is cured with the mold 40 adhering to the curable resin or during processing when the mold is peeled from the cured curable resin (including when heat is applied if necessary), is lower than the modulus of elasticity of the substrate 10, a laminate (optical body 1) of the substrate 10 and the fine uneven layer 20 made of the cured resin can be easily peeled from the mold 40, thereby increasing productivity without any complicated steps. The modulus of elasticity of the mold 40 is a tensile elastic modulus (Young's modulus), which can be measured by commercially available measuring apparatuses.

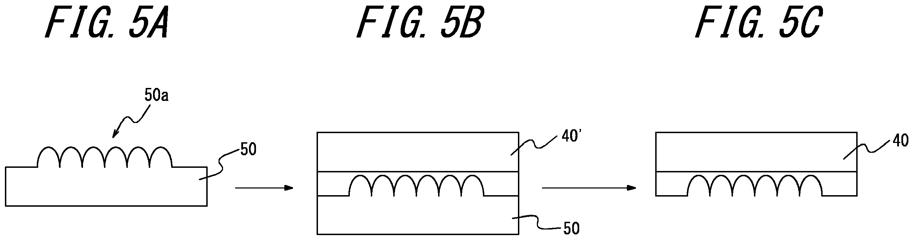

An example of a general method for manufacturing the mold 40 will be described here using FIG. 5.

First, a master platen 50 with a fine uneven structure 50a is prepared. The master platen 50 can be fabricated mainly by photolithography technology or cutting technology, but the detailed method is not particularly limited. Materials used for the master platen include quartz, Si, Ni-P plated substrates, and the like, but are not particularly limited.

Processing to form a film on a surface of the fabricated master platen 50 by vapor deposition, sputtering, CVD, coating, or other methods may be performed to provide a mold release property.

In FIG. 5, the above master platen is adhered to a mold material 40' to which a UV-curable mold resin is applied, and is peeled off after curing to produce a replica mold 40. The mold resin used here can be cold or thermosetting resin, or the resin alone can be used without using a mold material as a support. After fabrication, processing to impart a mold release property may be performed in the same manner as for the master platen.

For the step of curing the curable resin 20', as illustrated in (b) of FIG. 4, the mold 40 is pressed against the curable resin 20', which is applied onto the substrate 10, to transfer the fine uneven structure thereon, and then the curable resin 20' is cured to form a laminate of the substrate 10 and a cured material (to be the fine uneven layer 20) of the curable resin 20'.

Conditions for curing the curable resin 22', such as ultraviolet light, heat, moisture, and the like can be set as appropriate according to the type of resin. The type of the curable resin is the same as that described for the optical body 1 according to the present disclosure.

The step of peeling the laminate of the substrate 10 and the fine uneven layer 20 made of the cured resin from the mold 40, as illustrated in (c) of FIG. 4, is the step of peeling the laminate of the substrate 10 and the fine uneven layer 20 made of the cured resin. The peeled laminate becomes the above-described optical body 1 according to the present disclosure, as is or after being processed.

In the manufacturing method according to the present disclosure, after the laminate is peeled from the mold 40, the fine uneven layer 20 can be subjected to UV or electron beam processing and/or heat processing. When uncured components remain inside the fine uneven layer 20 or on a surface of the fine uneven layer 20 during manufacturing, there is a concern that components may segregate or elute during storage or use of the optical body, thereby contaminating surrounding parts or devices and causing defects. In order to reduce such a concern, the UV or electron beam processing and/or heat processing are/is processing to remove the uncured components by promoting cross-linking of the uncured components. It is also conceivable that removal of the uncured components can reduce fluctuations in optical properties after reflow.

The electron beam processing and heat processing should be performed under conditions that enable to promote the cross-linking of the uncured components or remove the uncured components, and there are no particular limitations on detailed conditions and the like.

### <Optical Device>

An optical device according to the present disclosure is characterized by having the optical body described above. By using the optical body according to the present disclosure, which has excellent antireflection performance over a wide wavelength range from the visible light region to the near-infrared region, optical properties can be improved over the wide wavelength range from the visible light region to the near-infrared region.

The optical device according to the present disclosure is not particularly limited except that the above-described optical body according to the present disclosure is provided as a component, and other components can be provided as appropriate depending on the type of device, required performance, and other factors.

The optical device is not particularly limited. For example, the optical device is a device such as an imaging device or imaging module, or a device such as a sensor or sensor module using infrared rays, and includes smartphones, personal computers, portable game machines, TVs, video cameras, transportation such as automobiles and airplanes, and the like equipped with these devices.

### EXAMPLES

Next, the present disclosure will be specifically described based on examples. However, the present disclosure is not limited to the following examples.

### <Examples 1 to 5 and Comparative Examples 1 to 8>

Optical bodies of respective samples were manufactured under various conditions, and optical properties thereof were evaluated as described below.

### (Examples 1 to 3 and Comparative Examples 6 to 8)

As each sample of the optical body 1, the fine uneven layer 20 having the fine uneven structure in its surface was formed on the 0.9 mm glass substrate (BK7) 10 made of a UV curable acrylic resin, as illustrated in FIG. 1.

The UV curable acrylic resin was composed of a resin composition containing 45 mass% monomer ("Aronix^{®} M305" (Aronix is a registered trademark in Japan, other countries, or both) manufactured by Toagosei Co., Ltd.), 20 mass% oligomer ("UV-1700" by The Nippon Synthetic Chemical Industry Co., Ltd.), 5 mass% reactive diluent ("DMAA^{®}" (DMAA is a registered trademark in Japan, other countries, or both) manufactured by KJ Chemicals Corporation), and 5 mass% photopolymerization initiator ("Irgacure 184" manufactured by IGM Resins B.V.) cured by UV irradiation.

Table 1 lists the uneven height H of the fine uneven structure, the pitch P of the recesses and protrusions, the arrangement of the uneven structure, and the diameter of the protrusions 21 of the obtained optical body samples.

### (Example 4)

As each sample of the optical body 1, the fine uneven layer 20 having the fine uneven structure in its surface was formed on both surfaces of the 0.9 mm glass substrate (BK7) 10 made of a UV curable acrylic resin, as illustrated in FIG. 3.

The UV curable acrylic resin was composed of a resin composition containing 45 mass% monomer ("Aronix^{®} M305" manufactured by Toagosei Co., Ltd.), 20 mass% oligomer ("UV-1700" by The Nippon Synthetic Chemical Industry Co., Ltd.), 5 mass% reactive diluent ("DMAA^{®}" manufactured by KJ Chemicals Corporation), and 5 mass% photopolymerization initiator ("Irgacure 184" manufactured by IGM Resins B.V.) cured by UV irradiation.

Table 1 lists the uneven height H of the fine uneven structure, the pitch P of the recesses and protrusions, the arrangement of the uneven structure, and the diameter of the protrusions 21 of the obtained optical body samples.

### (Example 5)

As a sample of the optical body 1, the fine uneven layer 20 having the fine uneven structure was formed on a front surface of the 0.9 mm glass substrate (BK7) 10 made of a UV curable acrylic resin, and SiO₂: 95 nm, Al₂O₃: 85 nm, ZrO₂: 135 nm, and MgF₂: 100 nm (multilayer AR1) were deposited by vacuum deposition on a rear surface of the glass substrate 10, as illustrated in FIG. 2.

The UV curable acrylic resin was composed of a resin composition containing 45 mass% monomer ("Aronix^{®} M305" manufactured by Toagosei Co., Ltd.), 20 mass% oligomer ("UV-1700" by The Nippon Synthetic Chemical Industry Co., Ltd.), 5 mass% reactive diluent ("DMAA^{®}" manufactured by KJ Chemicals Corporation), and 5 mass% photopolymerization initiator ("Irgacure 184" manufactured by IGM Resins B.V.) cured by UV irradiation.

Table 1 lists the uneven height H of the fine uneven structure, the pitch P of the recesses and protrusions, the arrangement of the uneven structure, and the diameter of the protrusions 21 of the obtained optical body samples.

### (Comparative Example 1)

As a sample of the optical body 1, a glass substrate (BK7) with a thickness of 0.9 mm was used.

### (Comparative Examples 2 and 4)

For Comparison Example 2, as a sample of the optical body 1, SiOz: 95 nm, Al₂O₃: 85 nm, ZrO₂: 135 nm, and MgF₂: 100 nm (multilayer AR1) were formed by vacuum deposition on the 0.9 mm glass substrate (BK7) 10.

For Comparative Example 4, as a sample of the optical body 1, Al₂O₃: 15 nm, SiO₂: 30 nm, Al₂O₃: 140 nm, SiO₂: 40 nm, Al₂O₃: 20 nm, SiO₂: 145 nm, Al₂O₃: 95 nm, ZrO₂: 135 nm, and MgF₂: 120 nm (multilayer AR2) were deposited by vacuum deposition on the 0.9 mm glass substrate (BK7) 10.

### (Comparative Examples 3 and 5)

For Comparative Example 3, as a sample of the optical body 1, SiO₂: 95 nm, Al₂O₃: 85 nm, ZrO₂: 135 nm, and MgF₂: 100 nm (multilayer AR1) were formed by vacuum deposition on the 0.9 mm glass substrate (BK7) 10.

For Comparative Example 5, as a sample of the optical body 1, Al₂O₃: 15 nm, SiO₂: 30 nm, Al₂O₃: 140 nm, SiO₂: 40 nm, Al₂O₃: 20 nm, SiO₂: 145 nm, Al₂O₃: 95 nm, ZrO₂: 135 nm, and MgF₂: 120 nm (multilayer AR2) were deposited by vacuum deposition on both surfaces of the 0.9 mm glass substrate (BK7) 10.

### <Evaluation>

The following evaluations were performed on each sample of a laminate obtained in each of the examples and comparative examples. Table 1 lists evaluation results.

### (1) Reflectance Evaluation

Table 1 lists wavelengths at which the samples of the optical body provide a maximum value (Ra) and a local minimum value (Rb) of reflectance for light from 400 nm to 950 nm on front and rear surfaces.

The reflectance at each wavelength was measured by a spectrophotometer (V-770 manufactured by JASCO). When the reflectance was measured, the rear surface was blackened to measure the reflectance of only the front surface.

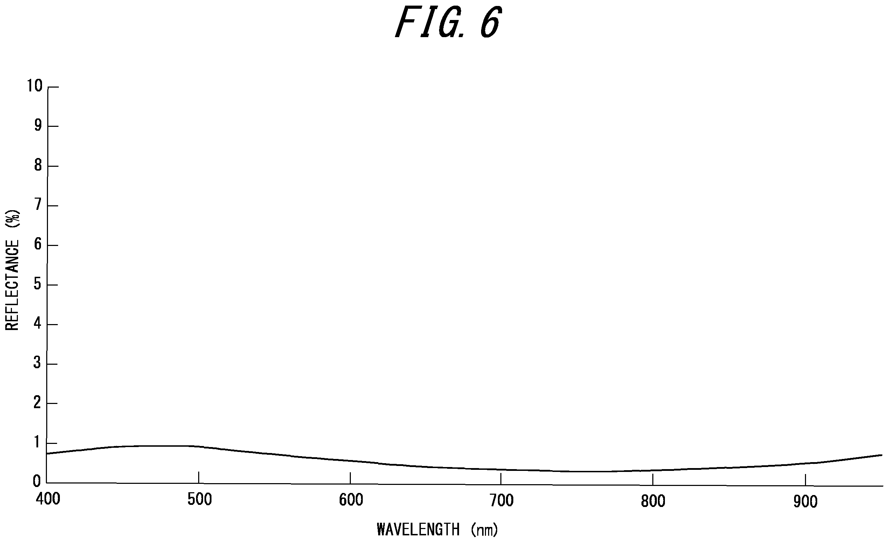

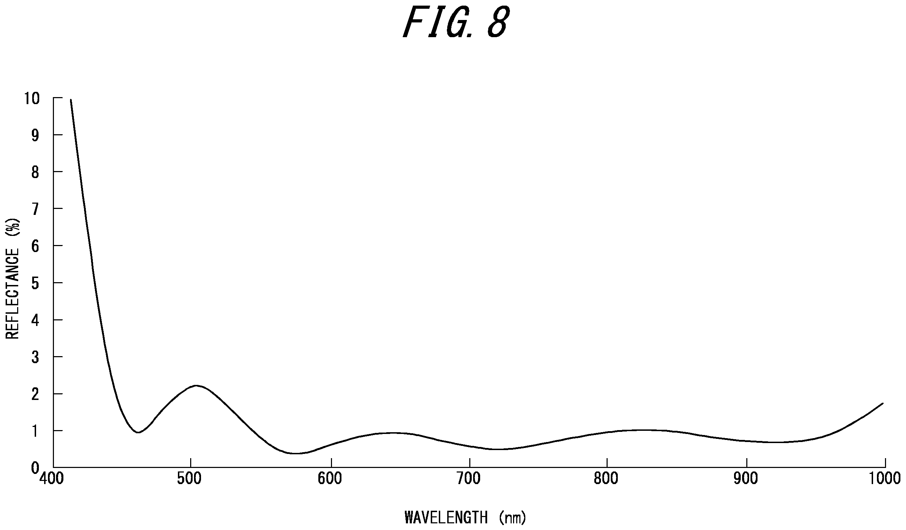

For the samples of the optical body as Example 1, Comparative Example 2, and Comparative Example 4, graphs of reflectance versus wavelength were prepared and are illustrated in FIGS. 6, 7, and 8.

### (2) Sum of Maximum Value (Rh (λ)) of Regular Reflectance of Higher Reflective Surface and Maximum Value (Tr) of Transmittance

The sum of a regular reflectance (RH (λ)) on a higher reflective surface of the front or rear surface of each sample of the optical body for light of 400 nm to 950 nm and a maximum value (Tr) of transmittance for light of 400 nm to 950 nm was calculated and listed in Table 1.

The regular reflectance of the higher reflective surface was measured by a spectrophotometer (V-770 manufactured by JASCO).

The total light transmittance of each sample of the optical body was measured by HM-150 manufactured by Murakami Color Research Laboratory.

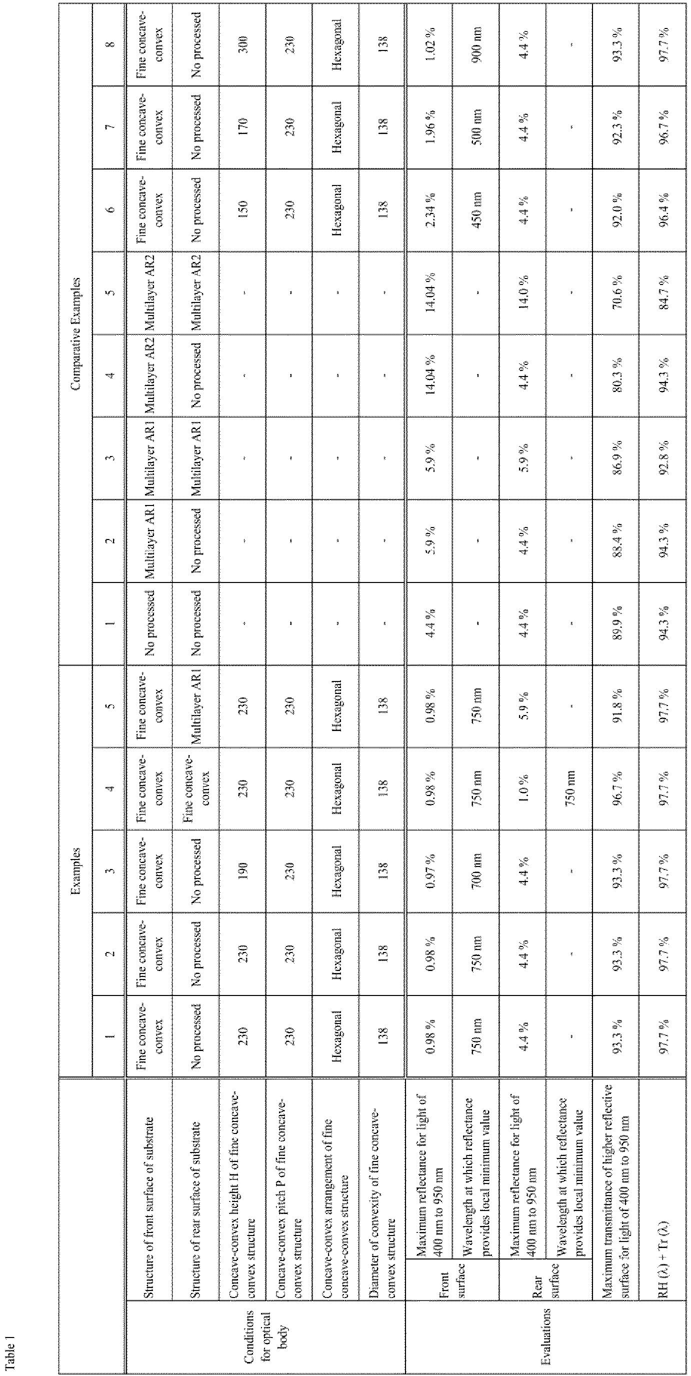

It is apparent from Table 1 and FIG. 6 that, for the optical bodies of the samples of Examples 1-5, which are within the scope of the present disclosure, antireflection performance can be achieved over a wide wavelength range on the surface on which the fine uneven layer is formed. It is also apparent that the sum of the maximum value (RH (λ)) of the regular reflectance of the higher reflective surface and the maximum value (Tr) of transmittance of the optical body is as high as 97 % or more.

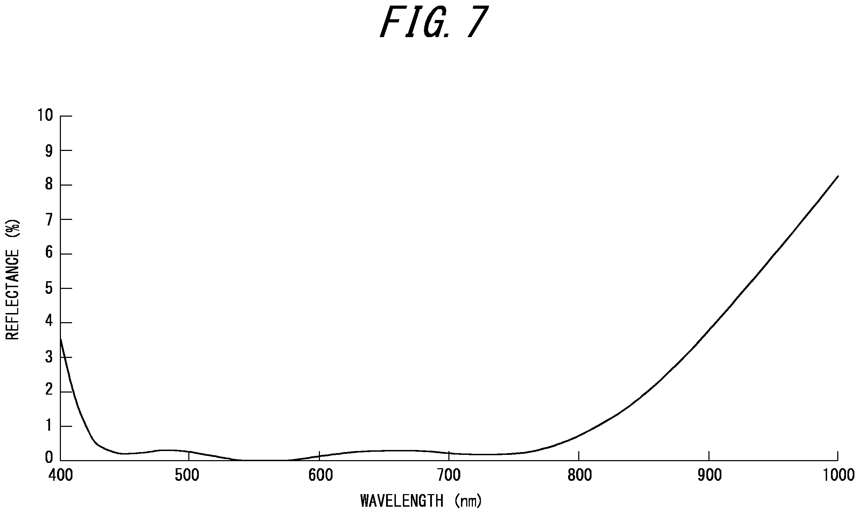

On the other hand, it is apparent from Table 1 and FIGS. 7-8 that, for the optical body of each sample of Comparative Examples, the antireflection performance on the surface is high in some wavelength regions.

### INDUSTRIAL APPLICABILITY

According to the present disclosure, it is possible to provide the optical body having excellent antireflection performance over a wide wavelength range from the visible light region to the near-infrared region, the method for manufacturing the optical body having excellent antireflection performance over a wide wavelength range from the visible light region to the near-infrared region at low cost without any complicated steps, and the optical device with excellent visibility over a wide wavelength range from the visible light region to the near-infrared region.

### REFERENCE SIGNS LIST

- 1: optical body
- 10: substrate
- 20: fine uneven layer
- 21: protrusion
- 22: support portion
- 30: multilayer antireflection film
- 40: mold
- 40a: fine uneven shape
- 40': mold material
- 50: master platen
- P: uneven period of fine uneven structure
- H: uneven height of fine uneven structure

## Claims

1. An optical body comprising:
a transparent substrate; and
a fine uneven layer with a fine uneven structure in at least one surface of the substrate,
wherein a maximum value (Ra) of reflectance for light in a wavelength region of 400 nm to 950 nm is 1 % or less, and a wavelength at which the reflectance is at a local minimum value (Rb) is 650 nm or more.

2. The optical body according to claim 1, wherein a sum of a maximum value (RH (λ)) of regular reflectance of a surface (higher reflective surface) with higher reflectance of a front or rear surface of the optical body for light in a wavelength region of 400 nm to 950 nm and a maximum value (Tr (λ)) of transmittance of the optical body for light in a wavelength region of 400 nm to 950 nm is 97 % or more (RH (λ) + Tr (λ) ≥ 97 %).

3. The optical body according to claim 1 or 2, wherein an average uneven height of the fine uneven structure is 180 nm or more.

4. The optical body according to any one of claims 1 to 3, wherein a rate of change in an uneven height of the fine uneven structure of the fine uneven layer after being subjected to reflow processing is 20 % or less.

5. A method for manufacturing the optical body according to any one of claims 1 to 4, comprising:
forming a fine uneven structure in a curable resin applied to a substrate, using a mold having a fine uneven shape; and
peeling the mold from a fine uneven layer made of the cured curable resin,
wherein a modulus of elasticity of the mold is equal to or less than a modulus of elasticity of the substrate.

6. The method for manufacturing the optical body according to claim 5, wherein after the mold is peeled from the fine uneven layer made of the cured curable resin, a laminate including the fine uneven layer and the substrate is subjected to electron beam processing and/or heat processing.

7. An optical device comprising the optical body according to any one of claims 1 to 4.

8. The optical device according to claim 7, being an imaging device or an imaging module, or a sensor or a sensor module.
